# EUROPEAN PATENT SPECIFICATION

(11) **EP 2 239 486 B1**
(45) Date of publication and mention of the grant of the patent: **12.10.2011**
(21) Application number: 10250740.7
(22) Date of filing: 08.04.2010
(51) Int. Cl.: F16K 31/02, F16K 31/385, F16K 31/40

(54) **Valves**
Ventile
Valves

(30) Priority: 08.04.2009 GB 0906064
(43) Date of publication of application: 13.10.2010
(73) Proprietor: Kohler Mira Limited, Gloucestershire GL52 5EP (GB)
(72) Inventor: Sansum, Nigel Paul, Cheltenham Gloucestershire GL52 5EP (GB); Bumpsteed, Austin Christopher, Cheltenham Gloucestershire GL52 5EP (GB)
(74) Representative: Wightman, David Alexander

(56) References cited:
- EP-A1- 1 548 344
- US-A1- 2001 038 082
- US-A1- 2002 171 055

## Description

This invention relates to valves for controlling fluid flow. The invention has particular, but not exclusive, application to on/off valves and more particularly on/off diaphragm valves. The invention is especially concerned with the application of on/off valves in ablutionary installations such as showers, baths, washbasins and the like.

Traditional mixers have a mechanical mixing valve with manually operable controls such as knobs and levers for turning flow on and off, selecting water temperature, and adjusting flow rate. One of the advantages of a mechanical mixing valve is that operation of the valve does not require connection to a mains electricity supply in the bathroom.

Recently there has been a trend to provide mixers with more sophisticated controls that provide the user with increased options for operation of the mixer including selection of water temperature, flow rate and duration, selection of delivery outlet as well as the ability to store settings for future use. Such mixers typically employ electronic controls with an interface panel having touch or proximity sensors to select the desired function. Such controls require connection to a mains electricity supply with the associated problems this presents for installation and use in a wet environment such as bathroom.

Nevertheless, in these days of high technology, consumers have increasing expectations for simplified controls and the present invention has been made with this in mind.

US 2002/0171055 discloses a valve for controlling gas flow in which the valve member is moved between open and closed positions by two sets of shape memory alloy wires that contract when heated. The valve member is held in the open and closed positions by an over-centre spring.

US 2001/0038082 discloses a valve for controlling fluid flow in which the valve member is biased to a closed position by a spring. The valve member is moved away from the closed position against the spring biasing by heating shape memory alloy wires to contract in length.

EP 1548344 discloses a pilot operated diaphragm valve with a push button actuator for operating the pilot valve.

It is a desired aim of the invention to provide a valve that is simple to operate, preferably without connection to a mains electricity supply.

It is another desired aim of the invention to provide a valve operable using a shape memory alloy.

It is yet a still further desired aim of the invention to provide a valve that can be used with a mixer to control flow, in particular to start and stop flow.

According to one aspect of the invention, we provide an on/off flow control valve as defined in claim 1. Preferred features are defined in claims 2 to 13.

The valve is operable to start and stop fluid flow but may also proportionally adjust the flow as part of a powered control circuit.

Preferably, the diaphragm is responsive to a pressure differential created by movement of the piston towards and away from a position preventing fluid flow through a pilot hole in the diaphragm.

Preferably, the actuator means includes a shape memory alloy wire configured to change in length under an applied voltage and then returns to its original length when the voltage is removed. Preferably the wire contracts (reduces in length) under an applied voltage.

Preferably, the actuator means comprises a pair of shape memory alloy wires configured such that change on length of a first wire moves the piston in a direction to open the valve and change in length of a second wire moves the piston in a direction to close the valve.

Preferably, the voltage required to reduce the length of the wire is low. However, the device is operable with a wide variety of voltages.

Preferably, a power source for applying the voltage is provided by at least one battery which may be a rechargeable battery although other power sources may be employed.

Preferably, the actuator means includes manually operable means for connecting the power source to the shape memory alloy wires.

Preferably, the manually operable means is arranged and/or adapted to selectively connect the power source to the shape memory alloy wires.

In one arrangement, the manually operable means comprises a push button wherein the push button is operable to apply a voltage to the wires alternately.

In another arrangement, the manually operable means comprises a pair of independently operable push buttons, one for each wire, wherein each push button is operable to apply a voltage to the associated wire.

The valve may be employed with a mechanical mixer valve for mixing hot and cold water to deliver water having a desired temperature to an outlet. In this application, operation of the valve can be used to start and stop flow independently of operation of the mixer to select temperature and/or flow rate.

The valve may be combined with the mixer, either built-in or connected to the mixer. Alternatively, the valve may be located remotely from the mixer. Where the valve is located remotely, the manually operable means may be incorporated into the mixer or provided at some other location which may be separate from the valve and the mixer.

The valve may be arranged to control flow of hot and cold water to the mixer. For example a separate valve may be associated with each of a hot inlet and a cold inlet to the mixer. Each of the valves controlling the inlets may have separate controls for operation independently of each other or they may have common controls for operation in unison.

Alternatively, the valve may be arranged to control flow of water from a mixer. For example, single valve may be associated with an outlet from the mixer.

The valve may be built-into the mixer during manufacture. Alternatively, the mixer and valve may be separate such that the valve can be used with both new mixers and existing mixers.

Preferably, a chamber for the piston is sealed from the fluid so as to remain dry when the fluid is liquid

Preferably, the shape memory alloy wire does not come into contact with the fluid. In some embodiments, the shape memory alloy wire is connected to the piston within the chamber. In some embodiments, the shape memory alloy wire is contained in a housing connected to the chamber and is connected to a lever coupled to the piston.

Preferably, the shape memory alloy wire reduces in length when heated and returns to its original length when the heat source is removed. Preferably, the shape memory alloy wire is heated by connecting to an electrical power source such as a battery, and the actuator means includes manually operable means for connecting the power source to the shape memory alloy wire.

Preferably, the actuator means comprises first and second shape memory alloy wires configured such that change in length of the first shape memory alloy wire moves the piston in a direction to open the valve and change in length of the second shape memory alloy wire moves the piston in a direction to close the valve.

Preferably, the manually operable means is arranged and/or adapted to selectively connect the electrical power source to the first and second shape memory alloy wires. In some embodiments, the manually operable means comprises a push button that is operable to apply a voltage to the first and second shape memory alloy wires alternately. In some embodiments, the manually operable means comprises a pair of independently operable push buttons, one for each shape memory alloy wire, and each push button is operable to apply a voltage to the associated shape memory alloy wire.

Other objects, benefits and advantages of the invention will be apparent from the following description of exemplary embodiments which is provided by way of non-limiting example with reference to the accompanying drawings wherein:
**Figure 1** shows a diaphragm valve in the closed position;
**Figure 2** shows the diaphragm valve of Figure 1 in the open position;
**Figure 3** is an exploded isometric view of a first embodiment of a diaphragm valve according to the invention;
**Figure 4** is a sectional view of the diaphragm valve of Figure 3 in the flow-off and power-off conditions;
**Figure 5** is a sectional view of the diaphragm valve similar to Figure 4 in the flow-on and power-on conditions;
**Figure 6** is a sectional view of the diaphragm valve similar to Figure 5 in the flow-on condition and power-off condition;
**Figure 7** is a sectional view of the diaphragm valve similar to Figure 6 in the flow-off condition and power-on condition;
**Figure 8** is a sectional view of the diaphragm valve offset from the position shown in Figure 7 in the flow-off condition and power-on condition;
**Figure 9** is an exploded isometric view of a second embodiment of a diaphragm valve according to the invention;
**Figure 10** is a sectional view of the diaphragm valve of Figure 9 in the flow-off and power-off conditions;
**Figure 11** is a sectional view of the diaphragm valve similar to Figure 10 in the flow-on and power-on conditions;
**Figure 12** is a sectional view of the diaphragm valve similar to Figure 11 in the flow-on condition and power-off condition;
**Figure 13** is a sectional view of the mixer similar to Figure 10 in the flow-off condition and power-on conditions; and
**Figure 14** is a sectional view of the diaphragm valve offset from the position shown in Figure 13 in the flow-off condition and power-on condition.

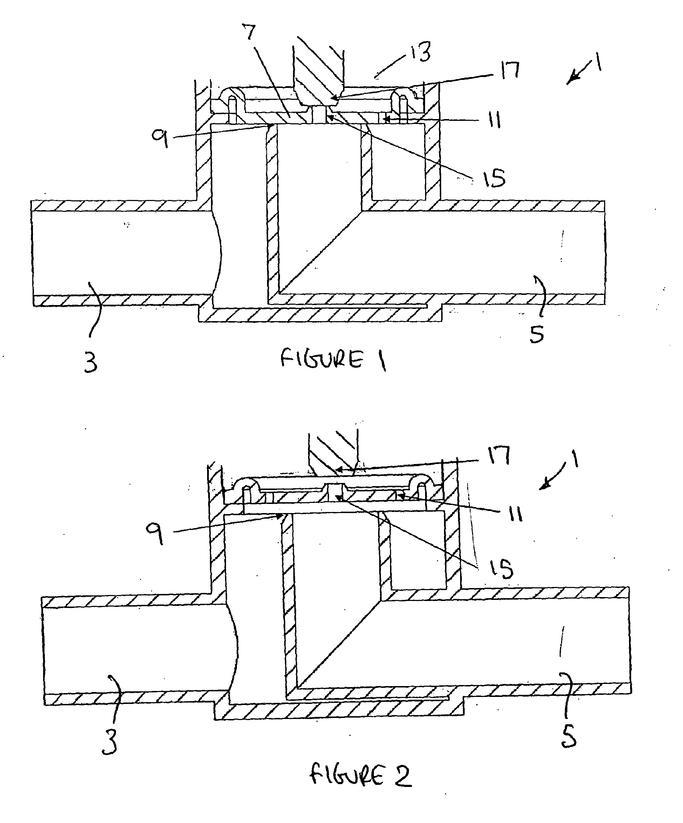

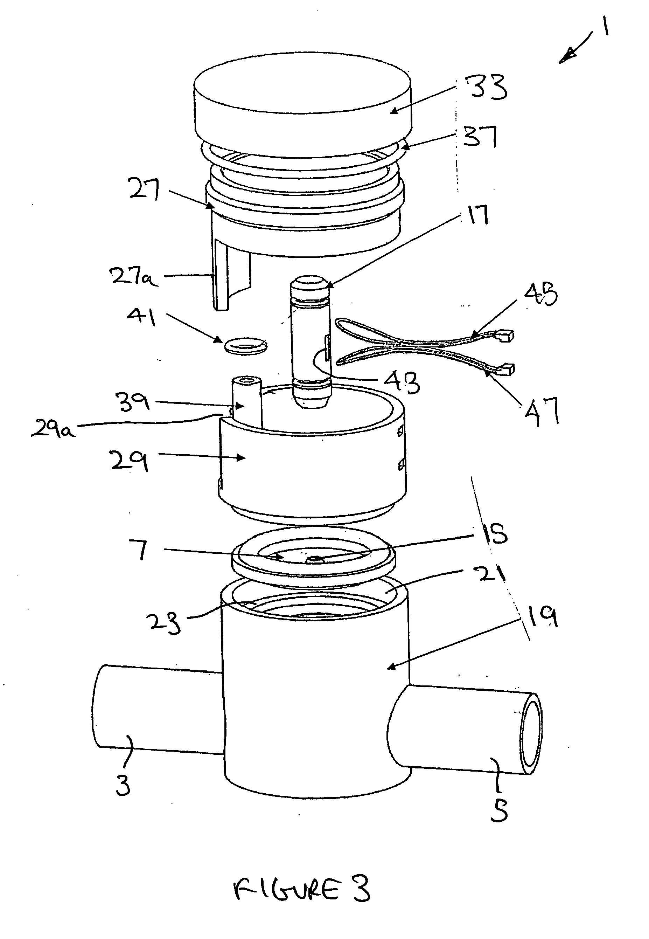

In the following description, operation of a diaphragm valve will be described with reference to Figures 1 and 2 followed by a description of two diaphragm valves embodying the invention with reference to Figures 3 to 14. Like reference numerals are used throughout to indicate corresponding parts.

Figure 1 shows the closed position of a diaphragm valve 1 and Figure 2 shows the open position of the diaphragm valve 1.

The diaphragm valve 1 has an inlet 3, an outlet 5 and, between the inlet 3 and outlet 5, a diaphragm 7 movable towards and away from a diaphragm seat 9 to control flow through the valve. A bleed hole 11 through the diaphragm 7 connects the inlet 3 to a control chamber 13. A pilot hole 15 through the diaphragm 7 connects the control chamber 13 to the outlet 5. The bleed hole 11 is permanently open and the pilot hole 15 is opened and closed by a piston 17 to control the pressure differential across the diaphragm 7 to open and close the valve 1.

The diaphragm 7 seals against the diaphragm seat 9 in the closed position to prevent fluid - in this case water although the valve may be used with other fluids including liquids and gases - flowing through the valve 1 from the inlet 3 to the outlet 5. The pilot hole 15 is closed by the piston 17. As a result, the fluid pressure in the control chamber 13 balances the fluid pressure at the inlet 3 and a pressure differential is created across the diaphragm 7 that maintains the diaphragm 7 in the closed position due to the larger surface area of the diaphragm 7 exposed to the pressure in the control chamber 13 compared to the inlet 3.

To open the valve 1, the piston 17 is lifted away from the pilot hole 15 allowing water to flow through the pilot hole 15 to the outlet 5. The pilot 15 is larger than the bleed hole 11 with the result that the pressure in the control chamber 13 drops and the pressure differential across the diaphragm 7 is reversed causing the diaphragm 7 to be pushed away from the diaphragm seat 9 in the open position allowing flow of water through the valve 1 straight from the inlet 3 to the outlet 5.

To close the valve 1, the piston 17 is moved towards the pilot hole 15 reducing the flow through the pilot hole 15 until the piston 17 closes the pilot hole 15 to stop flow through the pilot hole 15. The pressure in the control chamber 13 rises and the pressure differential across the diaphragm 7 is again reversed causing the diaphragm 7 to seal against the diaphragm seat 9 preventing flow through the valve 1.

Referring now to Figures 3 to 8, there is shown a diaphragm valve 1 according to a first embodiment of the invention. In this embodiment, the inlet 3 and outlet 5 are provided in a valve body 19 and the diaphragm 7 is secured in an annular opening 21 in the body 19 opposite the diaphragm seat 9. As shown the marginal edge of the diaphragm 7 is clamped between an internal ledge 23 within the opening 21 and a piston chamber 25 secured to the body 19, for example by engagement of mating screw threads (not shown).

The piston chamber 25 consists of two parts 27, 29 secured together and located by engagement of an axial projection 27a on the upper part 27 in an axial recess 29a in the lower part 29. The piston 17 is slidably mounted in aligned through bores 27b, 29b in the upper and lower parts 27, 29 and is sealed in the bores by O-rings 27c, 29c respectively.

The control chamber 13 is defined between the diaphragm 7 and the lower part 29 of the piston chamber 25. A pressure chamber 31 is defined between the upper part 27 of the piston chamber 25 and a sealing cap 33 secured to the upper part 27, for example by mating screw threads 35 and sealed by an O-ring 37.

A tube 39 extends from the lower part and is sealed at the upper end in an aperture in the upper part 27 by an O-ring 41. The tube 39 connects the control chamber 13 to the pressure chamber 31 to equalise the fluid pressure acting on each end of the piston 17 so that no axial force is created by an imbalance of pressures at each end tending to move the piston 17 in an axial direction. When the fluid is a liquid such as water, the O-rings 27c, 29c and 41 prevent fluid entering the piston chamber 25 and keep the piston chamber 25 dry.

The piston 17 has a transverse slot 43 intermediate the ends and a pair of wires 45, 47 pass through the slot 43 and are anchored on opposite sides of the piston chamber 25. In this embodiment, the wires 45, 47 form loops but this is not essential. By sealing the piston chamber 25 from the fluid, the wires 45, 47 are not exposed to and do not come into contact with the fluid.

The wires 45, 47 are made of a shape memory alloy such as nickel/titanium and are arranged one above the other. The shape memory alloy is such that the wires 45, 47 preferably reduce in length when heated such as by applying a voltage and increase in length and return to their original length when the voltage is removed.

Each wire 45, 47 is connected to a circuit including an actuator (not shown) and an electrical power source such as a battery (not shown) for selectively applying a voltage to the wires 45, 47. The actuator may be a push button that supplies a voltage alternately to the wires 45, 47 each time the button is depressed. Alternatively, the actuator may comprise a separate push button for each wire that supplies a voltage to the associated wire each time the button is depressed. It will be understood that any form of actuator may be employed to apply a voltage to the wires 45, 47.

The actuator may be incorporated in an ablutionary fitting such as a mixing valve (not shown) for mixing hot and cold water to deliver water having a desired temperature to an outlet (not shown) such as a tap of a bath or washbasin or a spray head of a shower via the diaphragm valve 1. The diaphragm valve 1 may be provided separately from the ablutionary fitting or built into the ablutionary fitting. A separate diaphragm valve may be retrofitted to an existing installation.

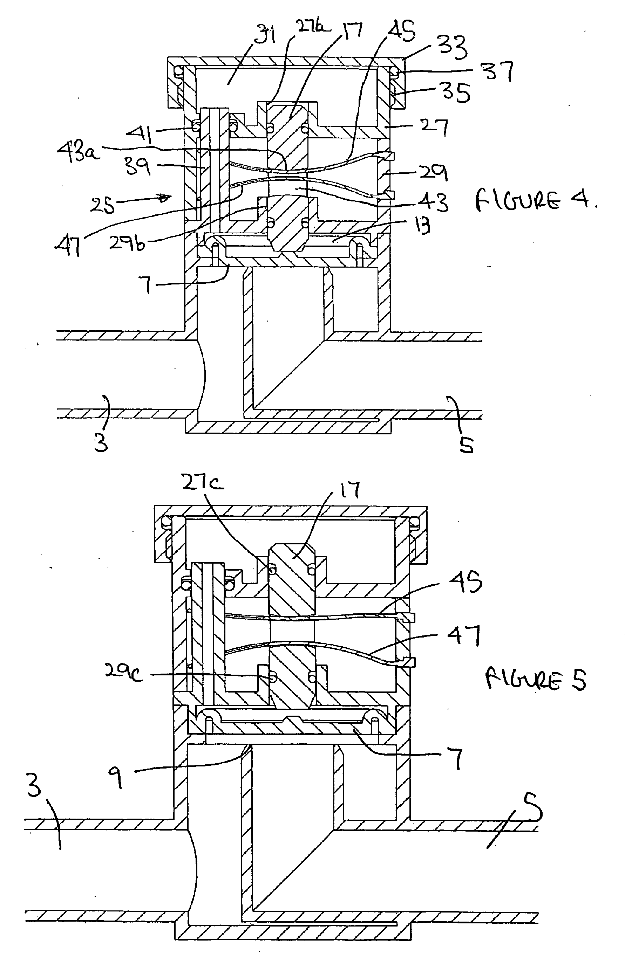

In the closed position of the valve 1 shown in Figure 4, the diaphragm 7 seals on the valve seat 9 and the piston 17 closes the pilot hole 15 in the diaphragm 7. The piston 17 is biased to the off position when the valve is hydraulically closed. With no voltage applied, the wires 45, 47 are at their natural length with no load acting on them and the upper wire 45 is just in contact with the upper surface 43a of the slot 43 in the piston 17.

When the button is pressed, a voltage is applied to the upper wire 45 for a short time causing the wire 45 to contract. The anchor points at each end of the upper wire 45 are located in a higher position than the centre of the wire. As a result, the change in length of the wire 45 pulls the piston 17 upwards away from the diaphragm 7 as shown in Figure 5. Lifting the piston 17 opens the pilot hole 15 in the diaphragm 7 causing the pressure in the control chamber 13 and pressure chamber 31 to drop allowing the diaphragm 7 to move away from the valve seat 9 so that water can flow through the valve.

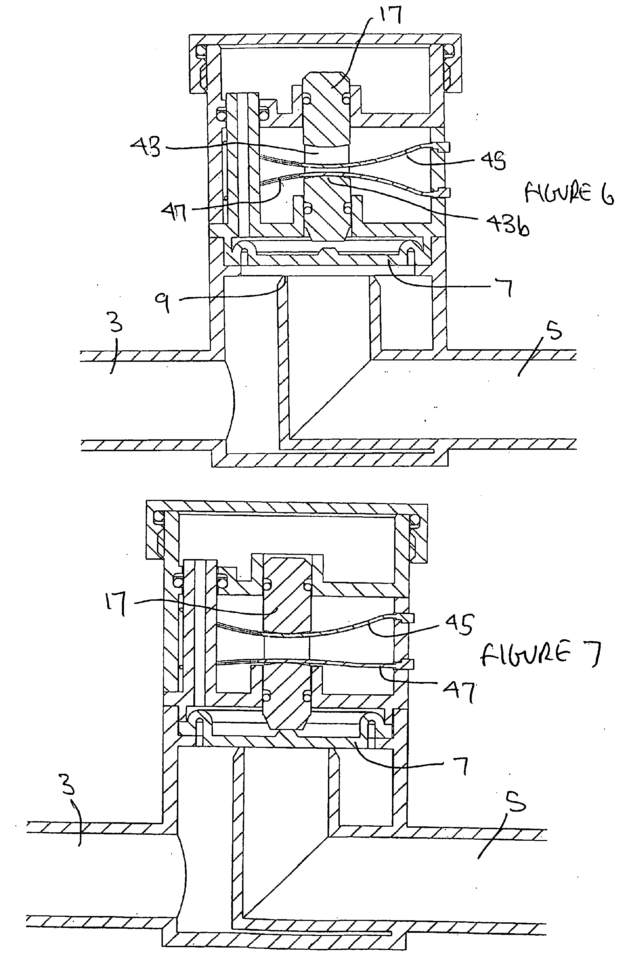

When the button is released, the voltage is no longer applied to the upper wire 45 allowing the wire 45 to return to its original length as shown in Figure 6. In this position the lower wire 47 is just in contact with the lower surface 43b of the slot 43 in the piston 17. The valve 1 remains open due to the pressure of the water acting on the inlet side of the diaphragm 7.

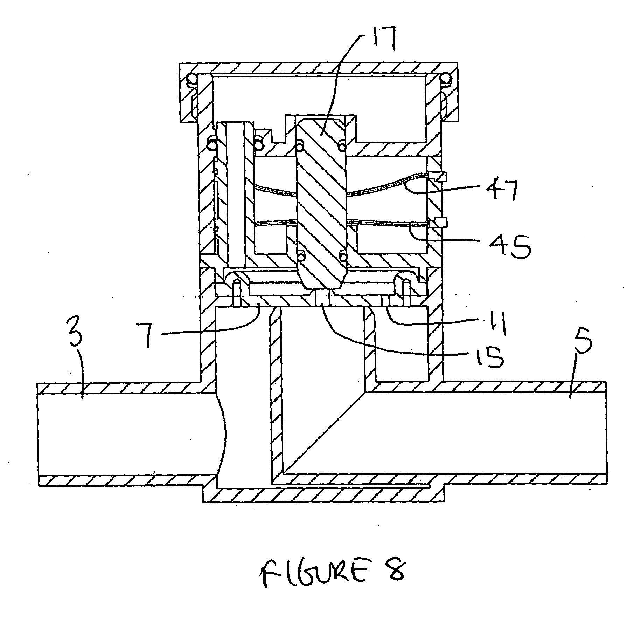

When the button is next pressed or a second button is pressed (depending on the wiring configuration) a voltage is applied to the lower wire 47 for short time causing the wire 47 to contract. The anchor points at each end of the lower wire 47 are located in a lower position than the centre of the wire. As a result, the change in length of the wire 47 pulls the piston 17 downwards towards the diaphragm 7 to reduce the gap between the pilot hole 15 and piston 17 until the piston 17 closes the pilot hole 15 as shown in Figures 7 and 8. Lowering the piston 17 causes the pressure in the control chamber 13 and pressure chamber 31 to rise and push the diaphragm 7 down onto the diaphragm seat 9 so that the water flow is shut-off.

When the button is released the voltage is no longer applied to the lower wire 47 allowing the wire 47 to return to its original length as shown in Figure 4. In this position the upper wire 45 is again just in contact with the upper surface 43a of the slot 43 in the piston 17. The valve 1 remains closed due to the pressure of the water acting on the diaphragm 7 in the control chamber 13.

The above operation sequence can be repeated to open and close the valve as desired.

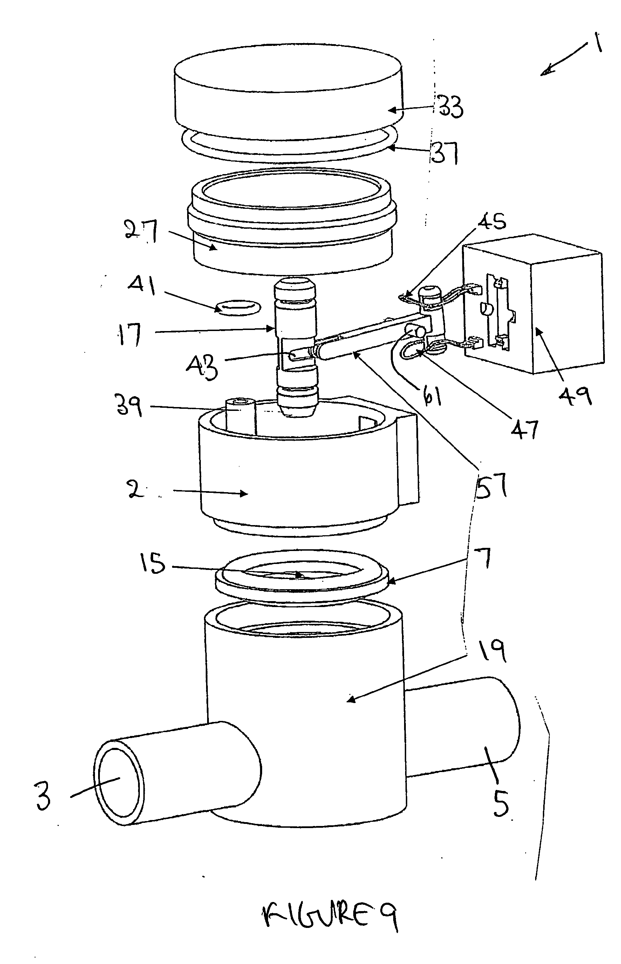

Referring now to Figures 9 to 14, there is shown a diaphragm valve 1 according to a second embodiment of the invention configured to allow a greater flow through the valve 1 than permitted by the previous embodiment.

Wires of shape memory alloy have a limited amount of reduction in length when a voltage/current is applied to the wire. The flow through the valve 1 is limited to the height the diaphragm 7 lifts off the diaphragm seat 9 when in the on position. In the configuration of the first embodiment, the amount of flow through the diaphragm valve 1 is limited by the amount the contraction of the upper wire 45 lifts the piston 17.

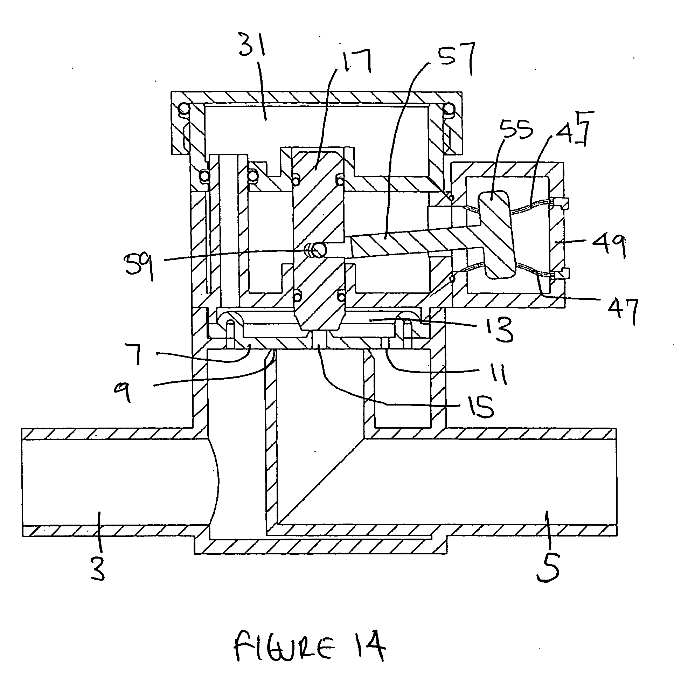

In the second embodiment, the wires 45, 47 are mounted in a housing 49 located on the side of the piston chamber 25 and extend through slots 51, 53 on either side of a transverse arm 55 at one end of a lever 57 mounted for pivotal movement about a pivot axis adjacent to the arm 55. The lever extends into the piston chamber 25 and the other end of the lever 57 passes either side of a U-shaped slot 43 in the piston 17 and is provided with a coupling pin 59 (Figure 14) slidably located in the slot 43. The wires 45, 47 are connected to an actuator (not shown) through a battery (not shown) and the actuator is configured to selectively apply a voltage to the wires 45, 47 to cause the wires to change in length. This change in length of the wires 45, 47 causes the lever 57 to pivot about pivot pin 61 (Figure 9) to raise and lower the piston 17 to operate the valve 1. As in the previous embodiment, the piston chamber 25 is sealed from the fluid and kept dry when the fluid is a liquid such as water. In this way, the wires 45, 47 in the housing 49 are not exposed to and do not come into contact with the fluid.

The actuator may be a push button that supplies a voltage to each wire alternately in response to successive depressions of the button. Alternatively, the actuator may comprise a separate push button for each wire that supplies a voltage to the wire each time the button is depressed. It will be understood that any form of actuator may be employed to apply a voltage to the wires 45, 47.

The actuator may be incorporated in an ablutionary fitting such as a mixing valve (not shown) for mixing hot and cold water to deliver water having a desired temperature to an outlet (not shown) such as a tap of a bath or washbasin or a spray head of a shower via the diaphragm valve 1. The diaphragm valve 1 may be provided separately from the ablutionary fitting or built into the ablutionary fitting. A separate diaphragm valve may be retrofitted to an existing installation.

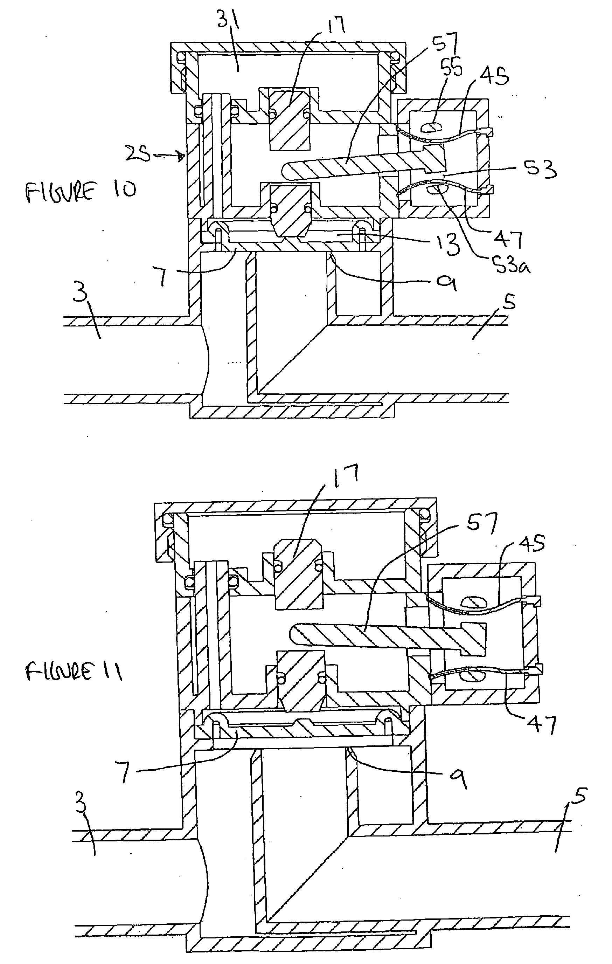

In the flow off position shown in Figure 10, the lever 57 adopts a lowered position in which the piston 17 closes the pilot hole 15 and the diaphragm 7 seals on the valve seat 9 to shut-off the flow of water through the valve 1. In this condition, the piston 17 is biased to the off position when the valve is hydraulically closed. With no voltage applied, the wires 45, 47 of shape memory alloy are at their natural length with no load acting on them. The lower wire 47 is just in contact with the lower surface 53a of the slot 53 in the arm 55.

When the button is pressed, a voltage is applied to the lower wire 47 for a short time causing the wire 47 to contract. The anchor points at each end of the wire 47 are located in a lower position than the centre of the wire. As a result, when the wire 47 contracts it pulls the end of the arm 55 downwards causing the lever 57 to pivot about pivot pin 61 and lift the piston 17 away from the diaphragm 7 as shown in Figure 11. Lifting the piston 17 opens the pilot hole 15 and causes the pressure in the control chamber 13 and pressure chamber 31 to drop allowing the diaphragm 7 to move away from the valve seat 9 and so that water can flow through the valve 1.

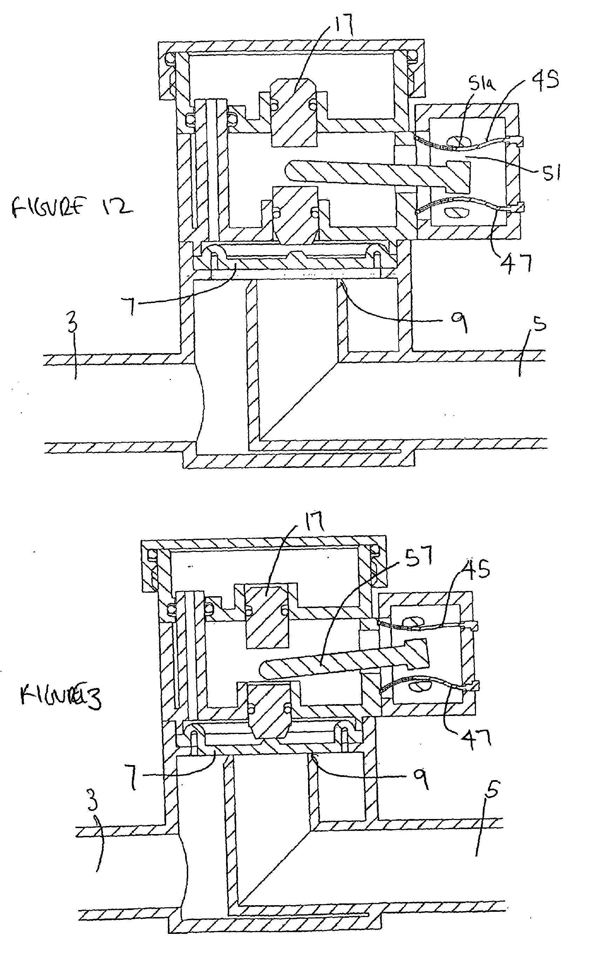

When the button is released the voltage is no longer applied to the wire 47 and it returns to its original length as shown in Figure 12. In this position the upper wire 45 sits just in contact with the upper surface 51a of the slot 51 in the arm 55. The valve 1 remains open due to the pressure of the water acting on the inlet side of the diaphragm 7.

When the button is next pressed or a separate button is pressed (depending on the wiring configuration) a voltage is applied to the upper wire 45 causing the wire to contract. The anchor points of the upper wire 45 are higher than the centre of the wire. As a result, when the wire 45 contracts it pulls the end of the arm 55 upwards causing the lever 57 to pivot about the pivot pin 61 and lower the piston 17 towards the diaphragm 7 to reduce the gap between the pilot hole 15 and piston 17 until the piston 17 closes the pilot hole 15 as shown in Figures 13 and 14. Lowering the piston 17 causes the pressure in the control chamber 13 and pressure chamber 31 to rise and push the diaphragm 7 down onto the valve seat 9 so that the water flow is shut-off.

When the button is released the voltage is no longer applied to the upper wire 45 allowing the wire 45 to return to its original length as shown in Figure 10. In this position the lower wire 47 is again just in contact with the upper surface 53a of the slot 53 in the arm 55. The valve 1 remains closed due to the pressure of the water acting on the diaphragm 7 in the control chamber 13.

The above operation sequence can be repeated to open and close the valve 1 as desired. Pivotal movement of the lever 57 amplifies the change in length of the wires 45, 47 and allows a greater range of movement of the piston 17 to be achieved which in turn allows a greater flow through the valve to be obtained.

As will now be understood from the description of the exemplary embodiments, the invention provides a valve, preferably an on-off valve to start and stop fluid flow, which is simple to operate, which requires little effort on behalf of the user to operate and which does not require a high voltage supply. It also allows for remote control of the valve with no additional plumbing requirements.

It will be understood that the invention is not limited to the embodiments above-described. For example, a spring could be added to the assembly to help bias the piston downwards with the load from the spring balanced by a differential pressure area in the raised position of the piston. A bistable spring could be used to hold the piston in whichever position it is moved into in place of or in addition to pressure balancing the piston.

The positions of the water inlet and outlet are shown purely for diagrammatic purposes and can be provided at any points on the valve body whether in line as shown or at any angle therebetween and/or offset in an axial direction.

The diaphragm valve could be built into a mixer valve or fitted at a later date to the mixer valve to add a push button on/off control to an existing mixer valve for a shower or other ablutionary appliance. The actuator can be mounted on the mixer valve, on the diaphragm valve or it could be remotely connected by wires to the diaphragm valve from some other location, e.g. outside a shower cubicle when used with a shower mixer valve. There could even be a number of actuators at different locations inside and/or outside the shower cubicle and connected to the diaphragm valve so the shower could be turned on and off from whichever location best suited the user.

Although the embodiments of the diaphragm valve above-described are powered by a battery, it would possible to operate the valve from a mains electricity supply using a step down transformer to provide the required voltage. Any suitable electrical power source may be used to heat the SMA wires. The act of operating the actuator could be used to generate power to cause the wires to contract. The SMA wires may be heated only while the button is depressed. Alternatively, the SMA wires may be heated for a pre-determined period of time independently of the length of time the button is depressed. While the embodiments of the diaphragm valve above described employ a push button or push buttons to operate the valve, the actuator may take any form that can be operated to close the circuit with the battery and the SMA wires.

In the above-described embodiments, the diaphragm valve is used to control the flow of water from the mixer valve. It will be understood however that it could be used to control the flow of water to the mixer valve. For example a separate diaphragm valve may be provided for each of the hot and cold inlets to the mixer valve. Each diaphragm valve may be operable independently of the other or both diaphragm valves may be simultaneously operable in unison. Independent operation may be achieved by providing each diaphragm with a separate actuator and set of SMA wires. Simultaneous operation may be achieved by arranging the inlets close together and providing a single actuator with one set of SMA wires for both diaphragm valves. Other means of simultaneous operation may be employed.

Furthermore, while the diaphragm valve has been described for controlling flow of water in application to ablutionary appliances it will be understood the diaphragm valve could be used with any fluid including liquids and gases for any application.

Other modifications, applications and uses of the diaphragm valve will be apparent to those skilled in the art and are considered to be within the scope of the invention as defined in the claims.

Moreover, while the exemplary embodiments describe and use particular features for the construction and operation of the diaphragm valve, it will be understood that the invention extends to and includes all and any equivalent features for the same purpose as defined in the claims.

## Claims

1. An on/off flow control valve having shape memory actuator means (45, 47) for controlling movement of a valve member (7) between a closed position preventing fluid flow through the valve and an open position allowing fluid flow through the valve, wherein the shape memory actuator means comprises shape memory alloy wire (45, 47) and the valve member comprises a diaphragm (7) responsive to movement of a piston (17) under the control of the shape memory alloy wire (45, 47) movement of the piston (17) is operable to control a pressure differential across the diaphragm (7) for moving the diaphragm (7) between the closed position and the open position, wherein **characterised in that** the piston (7) is pressure balanced.

2. An on/off flow control valve according to claim 1 wherein the shape memory alloy wire (45, 47) does not come into contact with the fluid.

3. An on/off flow control valve according to claim 2 wherein the shape memory alloy wire (45, 47) acts on the piston (17) in a chamber (25) sealed from the fluid.

4. An on/off flow control valve according to any preceding claim wherein the shape memory alloy wire (45, 47) reduces in length when heated and returns to its original length when the heat source is removed.

5. An on/off flow control valve according to claim 4 wherein, the shape memory alloy wire (45, 47) is heated by connecting to an electrical power source such as a battery, and the actuator means includes manually operable means for connecting the power source to the shape memory alloy wire (45, 47).

6. An on/off flow control valve according to claim 5 wherein, the actuator means comprises first and second shape memory alloy wires (45, 47) configured such that change in length of the first shape memory alloy wire (45) moves the piston (17) in a direction to open the valve and change in length of the second shape memory alloy wire (47) moves the piston (17) in a direction to close the valve.

7. An on/off flow control valve according to claim 6 wherein, the manually operable means is arranged and/or adapted to selectively connect the electrical power source to the first and second shape memory alloy wires (45, 47).

8. An on/off flow control valve according to claim 7 wherein, the manually operable means comprises a push button and the push button is operable to apply a voltage to the first and second shape memory alloy wires (45, 47) alternately.

9. An on/off flow control valve according to claim 7 wherein, the manually operable means comprises a pair of independently operable push buttons, one for each shape memory alloy wire (45, 47), and each push button is operable to apply a voltage to the associated shape memory alloy wire 945, 47).

10. An on/off flow control valve according to any preceding claim in combination with a mechanical mixer valve for mixing hot and cold water to deliver water having a desired temperature to an outlet.

11. The combination according to claim 10 wherein, the on/off flow control valve controls flow from the mixer valve.

12. The combination according to claim 10 wherein, two on/off flow control valves are provided to respectively control flow of hot and cold water to the mixer valve and the on/off flow control valves are operable independently of each other or in unison.

13. The combination according to any of claims 10 to 12 wherein, the or each on/off flow control valve is connected to or located remotely from the mixer valve and is controlled at or remotely from the mixer valve.

## Patentansprüche

1. Auf/Zu-Durchflusssteuerventil, ein Memory-Stellglied (45, 47) aufweisend zum Steuern einer Bewegung eines Ventilelements (7) zwischen einer geschlossenen Stellung, die einen Fluidstrom durch das Ventil verhindert, und einer offenen Stellung, die den Fluidstrom durch das Ventil zulässt, wobei das Memory-Stellglied Draht (45, 47) aus Memory-Legierung aufweist, und das Ventilelement eine Membran (7) aufweist, die auf eine Bewegung eines Kolbens (17) anspricht, der einer Steuerung durch den Draht (45, 47) aus Memory-Legierung unterworfen ist, wobei die Bewegung des Kolbens (17) dazu dient, einen Druckunterschied über der Membran (7) zu steuern, um die Membran (7) zwischen der geschlossenen Stellung und der offenen Stellung zu bewegen, wobei der Kolben druckreguliert ist.

2. Auf/Zu-Durchflusssteuerventil nach Anspruch 1, wobei der Draht (45, 47) aus Memory-Legierung nicht mit dem Fluid in Kontakt kommt.

3. Auf/Zu-Durchflusssteuerventil nach Anspruch 2, wobei der Draht (45, 47) aus Memory-Legierung in einer Kammer (25), die gegen das Fluid abgedichtet ist, auf den Kolben (17) wirkt.

4. Auf/Zu-Durchflusssteuerventil nach einem der vorangehenden Ansprüche, wobei der Draht (45, 47) aus Memory-Legierung sich verkürzt, wenn er erwärmt wird, und seine Ursprungslänge wieder annimmt, wenn die Wärmequelle entfernt wird.

5. Auf/Zu-Durchflusssteuerventil nach Anspruch 4, wobei der Draht (45, 47) aus Memory-Legierung durch Verbinden mit einer elektrischen Leistungsquelle, wie einer Batterie, erwärmt wird, und das Stellglied ein manuell zu betätigendes Mittel aufweist, um die Leistungsquelle mit dem Draht (45, 47) aus Memory-Legierung zu verbinden.

6. Auf/Zu-Durchflusssteuerventil nach Anspruch 5, wobei das Stellglied erste und zweite Drähte (45, 47) aus Memory-Legierung aufweist, die so ausgelegt sind, dass eine Änderung der Länge des ersten Drahtes (45) aus Memory-Legierung den Kolben (17) in einer Richtung bewegt, in der das Ventil geöffnet wird, und eine Änderung der Länge des zweiten Drahtes (47) aus Memory-Legierung den Kolben (17) in einer Richtung bewegt, in der das Ventil geschlossen wird.

7. Auf/Zu-Durchflusssteuerventil nach Anspruch 6, wobei das manuell zu betätigende Mittel so angeordnet und/oder angepasst ist, dass es die Leistungsquelle selektiv mit den ersten und zweiten Drähten (45, 47) aus Memory-Legierung verbindet.

8. Auf/Zu-Durchflusssteuerventil nach Anspruch 7, wobei das manuell zu betätigende Mittel eine Drucktaste aufweist, und die Drucktaste dazu dient, eine Spannung abwechselnd an die ersten und zweiten Drähte (45, 47) aus Memory-Legierung anzulegen.

9. Auf/Zu-Durchflusssteuerventil nach Anspruch 7, wobei das manuell zu betätigende Mittel ein Paar unabhängig zu betätigender Drucktasten aufweist, eine für jeden Draht (45, 47) aus Memory-Legierung, und jede Drucktaste dazu dient, eine Spannung an den zugehörigen Draht (45, 47) aus Memory-Legierung anzulegen.

10. Auf/Zu-Durchflusssteuerventil nach einem der vorangehenden Ansprüche in Kombination mit einem mechanischen Mischventil zum Mischen von warmem und kaltem Wasser, um Wasser mit einer gewünschten Temperatur zu einem Auslass zu liefern.

11. Kombination nach Anspruch 10, wobei das Auf/Zu-Steuerventil den Strom vom Mischventil steuert.

12. Kombination nach Anspruch 10, wobei zwei Auf/Zu-Durchflusssteuerventile vorgesehen sind, um jeweils einen Strom von warmem und von kaltem Wasser zum Mischventil zu steuern, und die Auf/Zu-Durchflusssteuerventile entweder unabhängig voneinander oder zusammen betätigt werden können.

13. Kombination nach einem der Ansprüche 10 bis 12, wobei das oder jedes Auf/Zu-Durchflusssteuerventil mit dem Mischventil verbunden oder fern von diesem angeordnet ist, und am Mischventil oder fern von diesem gesteuert wird.

## Revendications

1. Une soupape de commande d'écoulement marche/arrêt possédant un actionneur à mémoire de forme (45, 47) destiné à commander le mouvement d'un élément de soupape (7) entre une position fermée empêchant l'écoulement de liquide par la soupape et une position ouverte permettant l'écoulement de liquide par la soupape, où l'actionneur à mémoire de forme (45, 47) comprend un fil d'alliage à mémoire de forme et l'élément de soupape comprend un diaphragme (7) réactif au mouvement d'un piston (17) sous la commande du fil d'alliage à mémoire de forme (45, 47), où le mouvement du piston (17) permet de commander un différentiel de pression sur le diaphragme (7) de façon à déplacer le diaphragme (7) entre la position fermée et la position ouverte, le piston (7) étant équilibré en pression.

2. Une soupape de commande d'écoulement marche/arrêt selon la Revendication 1 où le fil d'alliage à mémoire de forme (45, 47) n'entre pas en contact avec le liquide.

3. Une soupape de commande d'écoulement marche/arrêt selon la Revendication 2 où le fil d'alliage à mémoire de forme (45, 47) agit sur le piston (17) dans une chambre (25) séparée hermétiquement du liquide.

4. Une soupape de commande d'écoulement marche/arrêt selon l'une quelconque des Revendications précédentes où le fil d'alliage à mémoire de forme (45, 47) diminue en longueur lorsqu'il est chauffé et revient à son longueur d'origine lorsque la source de chaleur est retirée.

5. Une soupape de commande d'écoulement marche/arrêt selon la Revendication 4 où le fil d'alliage à mémoire de forme (45, 47) est chauffé par un raccordement à une source de courant électrique telle qu'une batterie, et l'actionneur comprend un moyen actionnable manuellement destiné à raccorder la source électrique au fil d'alliage à mémoire de forme (45, 47).

6. Une soupape de commande d'écoulement marche/arrêt selon la Revendication 5 où l'actionneur comprend un premier et un deuxième fils d'alliage à mémoire de forme (45, 47) configurés de sorte qu'un changement dans la longueur du premier fil d'alliage à mémoire de forme (45) déplace le piston (17) dans une direction destinée à ouvrir la soupape et un changement dans la longueur du deuxième fil d'alliage à mémoire de forme (47) déplace le piston (17) dans une direction destinée à fermer la soupape.

7. Une soupape de commande d'écoulement marche/arrêt selon la Revendication 6 où le moyen actionnable manuellement est agencé et/ou adapté de façon à raccorder de manière sélective la source de courant électrique au premier et au deuxième fils d'alliage à mémoire de forme (45, 47).

8. Une soupape de commande d'écoulement marche/arrêt selon la Revendication 7 où le moyen actionnable manuellement comprend un bouton poussoir et le bouton poussoir est actionnable de façon à appliquer une tension au premier et au deuxième fils d'alliage à mémoire de forme (45, 47) de manière alternée.

9. Une soupape de commande d'écoulement marche/arrêt selon la Revendication 7 où le moyen actionnable manuellement comprend une paire de boutons poussoirs actionnables de manière indépendante, un pour chaque fil d'alliage à mémoire de forme (45, 47), et chaque bouton poussoir est actionnable de façon à appliquer une tension au fil d'alliage à mémoire de forme associé (45, 47).

10. Une soupape de commande d'écoulement marche/arrêt selon l'une quelconque des Revendications précédentes en combinaison avec un robinet mélangeur mécanique destiné à mélanger de l'eau chaude et de l'eau froide de façon à fournir de l'eau possédant une température souhaitée à une sortie.

11. La combinaison selon la Revendication 10 où la soupape de commande d'écoulement marche/arrêt commande l'écoulement à partir du robinet mélangeur.

12. La combinaison selon la Revendication 10 où deux soupapes de commande d'écoulement marche/arrêt sont fournies de façon à commander respectivement l'écoulement de l'eau chaude et de l'eau froide vers le robinet mélangeur et les soupapes de commande d'écoulement marche/arrêt sont actionnables indépendamment l'une de l'autre ou à l'unisson.

13. La combinaison selon l'une quelconque des Revendications 10 à 12 où la ou chaque soupape de commande d'écoulement marche/arrêt est raccordée à ou installée à distance du robinet mélangeur et est commandée sur le ou à distance du robinet mélangeur.
